# EUROPÄISCHE PATENTSCHRIFT

(11) **EP 1 035 961 B1**
(45) Veröffentlichungstag und Bekanntmachung des Hinweises auf die Patenterteilung: **11.01.2006**
(21) Anmeldenummer: 99929160.2
(22) Anmeldetag: 09.06.1999
(51) Int. Cl.: B29C 49/42, B29C 49/36

(54) **VORRICHTUNG ZUR HERSTELLUNG VON KUNSTSTOFFHOHLKÖRPERN**
DEVICE FOR PRODUCING PLASTIC HOLLOW BODIES
DISPOSITIF POUR LA PRODUCTION DE CORPS CREUX EN MATIERE PLASTIQUE

(30) Priorität: 10.06.1998 DE 19825874
(43) Veröffentlichungstag der Anmeldung: 20.09.2000
(73) Patentinhaber: KRONES AG, 93068 Neutraubling (DE)
(72) Erfinder: ACHHAMMER, Karl-Heinz, D-93086 Wörth (DE)
(86) Internationale Anmeldenummer: PCT/EP1999/003973
(87) Internationale Veröffentlichungsnummer: WO 1999/064220

(56) Entgegenhaltungen:
- EP-A- 0 396 482
- GB-A- 2 074 496
- US-A- 4 693 375

## Beschreibung

Die Erfindung betrifft eine Vorrichtung zur Herstellung von Kunststoffhohlkörpern, insbesondere Kunststoffflaschen.

Bei der Erzeugung von Kunststoffhohlkörpern, z.B. PET-Flaschen, werden sogen. Kunststoffrohlinge (Preformen) eingesetzt, die im Laufe des Prozesses auf die endgültige Form gebracht werden. Derartige Kunststoffrohlinge sind im allgemeinen zylindrische, an einem Ende geschlossene Hohlkörper, die z.B. durch Spritzguß gebildet werden. Diese Rohlinge werden einer Temperierstation zugeführt, in der sie auf eine für einen nachfolgenden Streckblasvorgang erforderliche Temperatur aufgeheizt werden. Im diesem Streckblasvorgang wird dann der Kunststoffhohlkörper mit seiner endgültigen Form erzeugt.

Ein Verfahren dieser Art ist z.B. in der EP 0060 521 beschrieben. Dort werden die Rohlinge auf einzelnen, unverbundenen Shuttleeinheiten entlang einer Führungsschiene durchwegs mit ihrer Öffnung nach oben hängend transportiert. Die Führungsschiene führt sie durch die Temperierstation und die Blasformstation, die in der gleichen Ebene angeordnet sind.

Während des Herstellungsprozesses kann es jedoch wünschenswert sein, wenn die räumliche Ausrichtung und die Höhenlage der Rohlinge veränderbar ist. So kann es z.B. in der Temperierstation von vorteil sein, wenn die Rohlinge mit ihrer Öffnung nach unten ausgerichtet sind.

In der EP 396 482 A1 ist dementsprechend eine Transporteinrichtung in einer Streckblasmaschine beschrieben, in der die Kunststoffrohlinge mittels durch eine endlose, in einer Ebene umlaufende Kette miteinander verbundenen Trägereinheiten transportiert werden, die einen Mechanismus aufweisen, der ein Wenden der Kunststoffrohlinge ermöglicht. Dazu ist jede Trägereinheit mit einem schwenkbaren Haltedorn für die Rohlinge versehen. An jedem Haltedorn sind zwei drehbare Rollen vorgesehen, die entlang eines Teils der Bewegungsbahn der Trägereinheiten stationär angeordnete, gewendelte Steuerkurven abtasten. Eine solche Vorrichtung benötigt also für jede Trägereinheit einen eigenen Schwenkmechanismus und ist daher nur aufwendig zu realisieren.

Durch die EP 894 045 B1 ist eine Vorrichtung zum Herstellen von Kunststoffhohlkörpern bekannt, bei der die Temperierstation über der Streckblasstation in einer anderen Ebene angeordnet ist. Das Wenden der Kunststoffrohlinge und deren Höhentransfer erfolgt durch mehrere hintereinandergeschaltete rotierende Greifer. Auch dies ist relativ aufwendig.

Aufgabe der vorliegenden Erfindung ist es, eine Vorrichtung anzugeben, mit deren Hilfe es auf einfache Art und Weise möglich ist, die räumliche Ausrichtung und die Höhenlage der Kunststoffrohlinge zu verändern.

Diese Aufgabe wird durch eine Vorrichtung mit den Merkmalen des Anspruchs 1 gelöst.

Mit diesen Merkmalen ist es möglich, die räumliche Ausrichtung und die Höhenlage der Kunststoffrohlinge auf einfache Weise zu ändern. Eine verwindung oder Krümmung der Führungsschiene ermöglicht ein Ändern der räumlichen Ausrichtung der Läufer mit den Rohlingen ohne Schwenklager, Schwenlanechanismen und zusätzliche Steuerkurven. Das Ändern der Ausrichtung der Kunststoffrohlinge geschieht schnell und präzise und ohne Beanspruchung der Rohlinge. Aufwendige Greifermechanismen oder dgl. werden nicht benötigt.

Gemäß einer vorteilhaften Ausgestaltung ist die mindestens eine Führungsschiene derart verwunden oder gekrümmt, daß die Kunststoffrohlinge vor Einlauf in die Temperierstation in eine Überkopfstellung, d.h. mit den Öffnungen nach unten, gewendet werden, sodaß sie in der Temperierstation mit ihrer Öffnung nach unten transportiert werden. Im Anschluß an die Temperierstation können die Rohlinge in einem zweiten verwindungs- bzw. Krümmungsbereich wieder in ihre hängende Ausgangsposition mit den Öffnungen nach oben gebracht werden.

Die Rohlinge können direkt von einer Zuführungsschiene an das Shuttlesystem übergeben werden. Es kann aber hierfür auch ein Übergaberad mit Aufnahmetaschen vorgesehen sein. Ein solches Übergaberad bringt die Kunststoffrohlinge auf den Abstand, der dem von einzelnen Läufern im Shuttelsystem definierten Teilungsabstand entspricht.

Nach Durchlaufen der Temperierstation können die Rohlinge direkt aus dem Shuttlesystem an das Blasrad der Streckblasstation abgegeben werden. Ebenso könnte hier auch ein Einlaufstern zwischengeschaltet sein, der sie dann in definiertem Abstand an das Blasrad übergibt.

In einer anderen Ausgestaltung können die Rohlinge vom Shuttlesystem auch durch die Blasstation hindurchgeführt werden, sodaß am Einlauf in die Blasstation keine Übergabe an ein anderes Transportmittel erforderlich ist.

In der Streckblasstation müssen die Kunststoffrohlinge einen größeren Abstand haben als in der Temperierstation, um Raum für die endgültige Ausdehnung der einzelnen Kunststoffhohlkörper, die während des Streckblasvorganges entstehen, zu schaffen.

Dies kann auf einfache Weise dadurch erreicht werden, daß der Abstand der einzelnen Läufer des Shuttlesystems nach Durchlauf durch die Temperierstation vergrößert wird.

Zum Antrieb können die Läufer des Shuttlesystems z.B. Vorsprünge bzw. Zungen aufweisen, an denen eine Antriebsvorrichtung angreifen kann. Mit Hilfe der Antriebsvorrichtung können über diese Zungen die Läufer entlang der Führungsschiene bewegt werden. Dabei kann es ausreichend sein, daß eine einzelne, ortsfeste Antriebsvorrichtung vorgesehen wird, die jeweils einen vorbeikommenden Läufer antreibt, wodurch die stromabwärts aneinanderliegenden Läufer weitergeschoben werden. Es ist aber auch denkbar, den Antrieb über Reibräder oder Reibriemen vorzunehmen, die an den Läufern angreifen und diese durch Reibschluss weiterschieben. Auch ein Antrieb durch Schwerkraft ist möglich.

Um eine gleichmäßige Temperierung der Kunststoffrohlinge in der Temperierstation zu erreichen, ist es vorteilhaft, wenn diese um ihre Längsachse gedreht werden. Bei der erfindungsgemäßen Vorrichtung kann dies in einfacher Weise dadurch erreicht werden, daß die Läufer drehbar gelagerte Halteeinrichtungen für die Kunststoffrohlinge aufweisen, die um eine Achse drehbar sind, die senkrecht zur Fortbewegungsrichtung ausgerichtet ist. Eine Rotation um diese Achse kann auf einfache Weise durch Eingriff eines feststehenden Vorsprunges mit den Antriebszungen der einzelnen Läufer hervorgerufen werden. Ein Drehantrieb über Reibung wäre aber ebenfalls möglich.

Die Rohlinge können auf den Läufern z.B. durch Klammerelemente gehalten werden. Besonders vorteilhaft ist es jedoch, wenn die Rohlinge auf den Läufern mit Hilfe eines Dornes gehalten werden, der unter Reibschluß in die Öffnung der einzelnen Kunststoffrohlinge eingreift.

Die Rohlinge können auf diesen Dorn mit Hilfe eines Aufsteckmechanismus aufgebracht werden. Eine Ausführungsform sieht hierzu vor, daß der Abstand des Dornes von den Führungsschienen gegen eine Federkraft verändert werden kann. Auf diese Weise kann z.B. mit einer entsprechenden Kulissenführung der Dorn zuerst näher an die Führungsschiene herangebracht werden und zur Aufnahme eines Kunststoffrohlings durch die Federkraft wieder weiter von der Führungsschiene entfernt werden, um in die Öffnung des Kunststoffrohlings einzugreifen. Eine solche Ausgestaltung ermöglicht eine schnelle und präzise Übernahme der Kunststoffrohlinge durch die Läufer.

Die Läufer können aber auch lösbare Aufnahmeelemente umfassen, die zusammen mit den Kunststoffrohlingen an das Blasrad übergeben werden und nach dem Streckblasvorgang von den Kunststoffrohlingen abgenommen und wieder mit den Läufern verbunden werden.

Im folgenden wird die Erfindung anhand der Zeichnungen weiter erläutert, die eine Ausführungsform der erfindungsgemäßen Vorrichtung darstellen.

Dabei zeigt
- Figur 1: eine schematische Draufsicht auf eine erfindungsgemäße Vorrichtung,
- Figur 2: eine perspektivische Darstellung eines Bahnabschnitts mit einem Läufer zur Erläuterung des grundsätzlichen Aufbaus,
- Figur 3: einen erfindungsgemäß einsetzbaren Läufer in einer Vertikalschnittansicht in Transportrichtung im Übergabebereich gesehen und

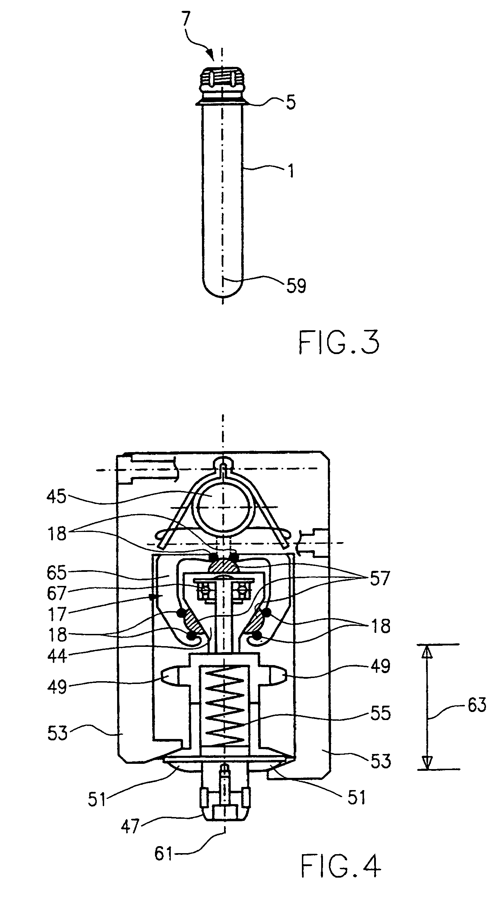

- Figur 3: einen Kunststoffrohling.

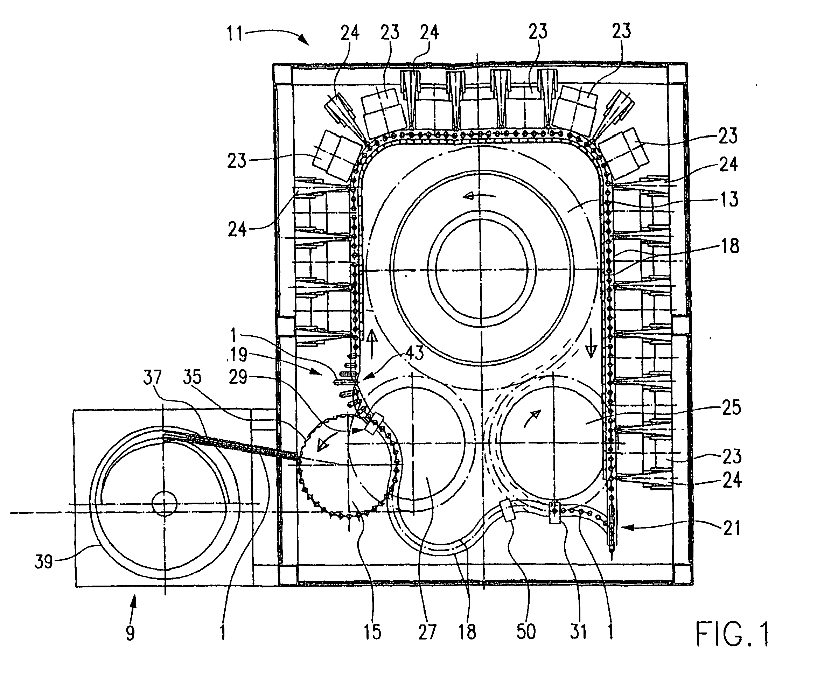

In Figur 1 ist in schematischer Draufsicht eine Maschine zur Herstellung von Kunststoffflaschen dargestellt. Sie umfasst eine Zuführstation 9, eine Temperierstation 11 und eine darunterliegende Blasstation mit einem Blasrad 13.

In der Zuführstation werden Kunststoffrohlinge 1 der z.B. in Figur 4 dargestellten Art über ein Zuführrad 39, das in bekannter Weise ausgebildet sein kann, an ihrem Kragen 5 hängend an eine Zuführrutsche 37 übergeben. Diese Zuführrutsche 37 führt zu einem Übergaberad 15, das am äußeren Umfang Aufnahmetaschen 35 aufweist, die an den Durchmesser der Kunststoffrohlinge 1 angepaßt sind und diese ebenfalls an dem Kragen 5 tragen können. Ein erster Übergabebereich 29 dient der Übergabe der Kunststoffrohlinge 1 an ein Shuttlesystem 43, das weiter unten noch näher erläutert wird. In diesem Übergabebereich 29 nähern sich die Läufer 44 des Shuttlesystems von oben dem Übergaberad 15 und folgen dem äußeren Umfang des Übergaberades, das sich in Pfeilrichtung dreht.

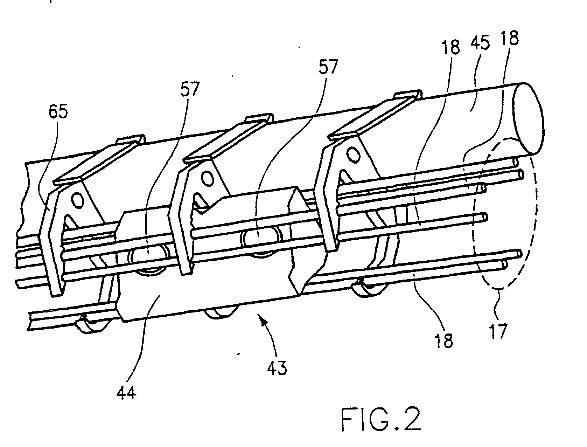

Figur 2 zeigt in einem Ausschnitt den grundsätzlichen Aufbau eines Shuttlesystems 43, das für die Verwirklichung der Erfindung eingesetzt werden kann. Systeme dieser Art sind an sich bekannt und werden z.B. von der Schweizer Fa. IPT Weinfelden AG hergestellt. Die einzelnen Läufer 44, von denen nur einer dargestellt ist, laufen aneinanderanliegend in einem von den Laufschienen 18 gebildeten Käfig 17. Die Laufschienen 18 sind über im wesentlichen U-förmige Halter 65 an einem rohrförmigen Träger 45 abgestützt. Die einzelnen Läufer weisen Kugeln 57 auf, so daß sie im Käfig 17 rollen können.

Zum erfindungsgemäßen Einsatz sind die Läufer 44 anders als in Figur 2 dargestellt so weitergebildet, daß sie Rohlinge 1 aufnehmen und halten können. Im einzelnen ist dies aus Figur 3 ersichtlich. Auf dem dort im Vertkalschnitt dargestellten Läufer 44 ist ein Dorn 47 angeordnet, dessen Außendurchmesser im wesentlichen dem Innendurchmesser eines Kunststoffrohlinges 1 entspricht. Dieser Dorn ist über eine Feder 55 beaufschlagt an dem Läufer 44 befestigt. Antriebszungen bzw. -zähne 49 erstrecken sich seitlich. Die die Elemente 47, 49, 55 umfassende Halteeinrichtung ist in einem Lager 67 um die Rotationsachse 61 drehbar an dem Läufer 44 befestigt.

In Figur 3 ist weiterhin eine stationäre Abstandskulisse 53 gezeigt, die mit zur Halteeinrichtung gehörenden Anschlägen 51 zusammenwirkt. Die Abstandskulisse 53 ist im Übergabebereich 29 dabei derart ausgebildet, daß beim Entlanglaufen des Läufer 44 senkrecht zu der Figurenebene der Abstand 63 zuerst um die Länge des Dornes 47 verkürzt und im Anschluß wieder vergrößert wird. Eine derartige Abstandskulisse ist auch im zweiten Übergabebereich 31 zur Übergabe der Kunststoffrohlinge an den Einlaufstern 25 vorgesehen.

Mit den Antriebszungen 49 können Antriebsmittel 50 zusammenwirken, die am Übergabebereiches 29 angeordnet sind, um die Läufer durch die Temperierstation 11 bis zum Wendebereich 21 zu schieben. Da die Läufer 44 vom Übergabebereich 29 an durch die Temperierstation 11 hindurch bis zum Wendebereich 21 direkt aneinanderliegend geschoben werden, ist ein einziges Antriebsmittel 50 ausreichend, um die gesamte Läuferkette in Bewegung zu halten. Das Antriebsmittel 50 kann z.B. in Art eines Zahnrades ausgebildet sein, dessen Zähne seitlich in die Bahn der Läufer eingreifen und diese an den Antriebszungen 49 weiterschieben. Ebenso kann vorgesehen sein, daß derartige Zahnräder noch weiter in die Bahn eingreifen und direkt die Läufer weiterschieben.

In Figur 1 nicht eingezeichnet sind Rotationseinrichtungen, die die Dorne 47 mit den aufgesteckten Kunststoffrohlingen 1 während ihres Weges durch die Temperierstation 11 um die Längsachse 61 bzw. 59 drehen. Als Rotationseinrichtungen können z.B. feststehende Zahnstangen verwendet werden, die auf einer Seite in die Bahn der Läufer eingreifen und mit den Antriebszungen 49 zusammenwirken, um so eine Drehung des Dornes hervorzurufen, wenn sich der Läufer 44 an der feststehenden Zahnstange vorbeibewegt. Ebenso sind seitlich eingreifende Reibräder, Reibriemen oder Reibschienen möglich, die an den Halteeinrichtungen angreifen.

Im Bereich zwischen dem Einlaufstern 25 zum Blasrad 13 bis zum Übergaberad 15 steigt das Shuttelsystem 43 mit seinen Schienen 18 von der tieferen Ebene des Einlaufsternes 25 auf höhere die Ebene der Temperierstation 11 an. Die Shuttleeinheiten werden in diesem Bereich mit einer weiteren Antriebseinrichtung 50 nach oben geschoben.

Mit dieser Maschine kann nun wie folgt geabeitet werden. In bekannter Weise werden die Kunststoffrohlinge 1 von dem Zuführrad 39 an die Zuführrutsche 37 übergeben. Die Zuführrutsche 37 ist derart geneigt, daß die Reihe der Kunststoffrohlinge 1 durch die Schwerkraft in Richtung des Übergaberades 15 abrutscht. Dort werden die Kunststoffrohlinge einzeln an ihrem Kragen 5 hängend von Aufnahmetaschen 35 des Übergaberades 15 durch dessen Drehung in Pfeilrichtung übernommen und dabei auf den Abstand der Dorne 47 gebracht. Das Übergaberad 15 transportiert die Rohlinge 1 zum ersten Übergabebereich 29.

Diesem Übergabebereich nähern sich die Läufer 44 des Shuttlesystems von oben, wobei die Dorne 47 nach unten weisen. Dort werden die Anschläge 51 von den Abstandskulissen 53 erfaßt, die zu einer Verkürzung des Abstands 63 führen. Der Dorn 47 zieht sich also bei der Bewegung durch den ersten Übergabebereich 29 in Richtung des Käfigs 17 zurück. Die Abstandskulisse 53 verläuft so, daß der Abstand 63 an einer Stelle im Übergabebereich 29 wieder vergrößert wird, an der sich der Läufer 44 gerade oberhalb der Öffnung 7 eines Kunststoffrohlings 1 befindet, der in einer Aufnahmetasche 35 des Übergaberades 15 hängt. Auf diese Weise wird der Dorn 47 in den Rohling 1 eingeführt. Der Umfang des Dorns 47 - ggf. unter Einsatz eines Federrings - ist so auf den Innendurchmesser eines Rohlings angepasst, daß ein Festklemmen erfolgen kann. Nach Übernahme eines Rohlings 1 bewegt sich der Läufer 44 in den Verwindungsbereich 19 hinein. Hier sind die Laufschienen 18 bzw. der Käfig 17 derart verwunden, daß die Läufer 44 auf den Kopf gestellt werden. Dadurch werden die Kunststoffrohlinge 1 aus einer Stellung, in der ihre Mündung 7 nach oben zeigt, in eine Stellung gebracht, in der ihre Mündung nach unten zeigt. In dieser Stellung durchlaufen die Rohlinge die Temperierstation 11 in Pfeilrichtung, wobei sie auf die für den nachfolgenden Streckblasvorgang erforderliche Temperatur gebracht werden.

Bei ihrem Weg durch die Temperierstation 11 werden die Halteeinrichtungen der Läufer zusammen mit den Kunststoffrohlingen 1 um die Rotationsachse 61 bzw. die Längsachse 59 gedreht. Durch diese Rotation ist eine gleichmäßige Erwärmung der Kunststoffrohlinge durch die Heizeinrichtungen 23, z.B. Infrarot-Strahler, gewährleistet, die sich entlang des Weges der Läufer durch die Temperierstation 11 befinden. Die Gebläseeinheiten 24, die zwischen den Heizeinrichtungen 23 angeordnet sind, dienen dazu, daß der äußere Bereich der Kunststoffrohlinge 1 nicht überhitzt wird.

In dem stromabwärts der Temperierstation 11 folgenden kombinierten Höhentransfer- und Wendebereich 21 werden die Läufer 44 auf eine Ebene gesenkt, die unterhalb der Temperierstation 11 liegt und zudem gleichzeitig aus der Stellung, in der die Öffnungen 7 nach unten zeigen, in eine Stellung gebracht, in der die Öffnungen 7 wieder nach oben zeigen. Dies wird durch den nach unten (in die Zeichnungsebene hinein) führenden Bogen im Wendebereich 21 erreicht. Dieser Bogen liegt in einer senkrechten Ebene (senkrecht zur Zeichnungsebene) und umfaßt einen Kreisbogen von ca. 180 Grad. Danach gelangen die Läufer in einen zweiten Übergabebereich 31, in dem sich eine Abstandskulisse befindet, die der Abstandskulisse 53 der Figur 2 entspricht. Wiederum wird der Dorn 47 zurückgezogen, nachdem sich die Kunststoffrohlinge 1 im Eingriff mit den greiferbestückten Aufnahmetaschen des Einlaufsternes 25 befinden, der die Kunststoffrohlinge auf den für den nachfolgenden Blasvorgang erfordlichen Teilungsabstand bringt. Die auf diese Weise entleerten Läufer gelangen dann wieder zum Antriebsmittel 50, das sie in direkter Abfolge entlang des bogenförmigen Anstieges 41 nach oben schiebt. Die erhitzten Kunststoffrohlinge, die in den Aufnahmetaschen des Einlaufsterns 25 transportiert werden, werden an das Blasrad 13 übergeben, wo sie in bekannter Weise auf die endgültige Form einer Kunststoffflasche aufgeblasen werden. Nach dem Streckblasvorgang werden die Flaschen an das Auslaufrad 27 übergeben und zur weiteren Bearbeitung abtransportiert.

Abweichend von der beschriebenen Ausführungsform ist es auch möglich, auf den Einlaufstern 25 zu verzichten und das Shuttlesystem bis zum Blasrad oder sogar durch die Blasstation hindurch fortzuführen. Letzteres ist teilweise durch strichlierte Linien angedeutet.

Bei der dargestellten Konstruktion der Läufer ist der Aufnahmedorn zwar drehbar, aber unverlierbar mit dem Läufer verbunden. In Abwandlung dieser Konstruktion könnten die Rohlinge auch an Dorne übergeben werden, die über an- und abkuppelbare Träger mit den Läufern verbunden sind. Zum Durchlaufen der Blasstation könnten die Träger mit den Rohlingen dann vom Shuttlesystem abgekoppelt und hinter der Blasstation dann wieder angekuppelt werden.

Die Anordnung der Temperierstation und der Streckblasstation in zwei verschiedenen Ebenen ermöglicht eine sehr kompakte Bauweise.

## Patentansprüche

1. Vorrichtung zum Herstellen von Kunststoffhohlkörpern, insbesondere Kunststoffflaschen, mit einer Transporteinrichtung (43), mit deren Hilfe Kunststoffrohlinge (1) von einer Übergabestation (29) durch eine Temperierstation (11) zu einer Streckblasstation (13) geführt werden, wobei die Transporteinrichtung (43) mindestens eine, eine geschlossene Bahn bildende Führungsschiene (17, 18), in der einzelne Läufer (44) mit Halteeinrichtungen (47) für die Kunststoffrohlinge (1) laufen, sowie mindestens ein Antriebsmittel (49, 50), das die Läufer (44) entlang der mindestens einen Führungsschiene (17, 18) schiebt, umfasst, **dadurch gekennzeichnet, dass** die Streckblasstation (13) in einer anderen Ebene angeordnet ist als die Temperierstation (11), dass zwischen Temperierstation (11) und Streckblasstation (13) ein Transferbereich (21) vorgesehen ist, in dem die mindestens eine Führungsschiene (17, 18) derart gekrümmt ist, dass die Läufer (44) beim Transport der Kunststoffrohlinge (1) von der Ebene der Temperierstation (11) in die Ebene der Streckblasstation (13) bewegt werden, und dass wenigstens eine Ausrichtungsänderung der räumlichen Lage der Kunststoffrohlinge (1) durch Verwindung bzw. die Krümmung der mindestens einen Führungsschiene (17, 18) erfolgt.

2. Vorrichtung nach Anspruch 1, **gekennzeichnet durch** einen ersten Verwindungs- bzw. Krümmungsbereich (19) zwischen Übergabestation (29) und Temperierstation (11), in dem die mindestens eine Führungsschiene (17, 18) derart verwunden bzw. gekrümmt ist, daß die Läufer (44) aus einer räumlichen Ausrichtung, in der sie die Kunststoffrohlinge mit deren Öffnung (7) nach oben transportieren, in eine räumliche Ausdehnung gebracht werden, in der sie die Kunststoffrohlinge (1) mit deren Öffnung (7) nach unten transportieren.

3. Vorrichtung nach einem der Ansprüche 1 und 2, **gekennzeichnet durch** einen zweiten verwindungs- bzw. Krümmungsbereich (21) im Anschluß an die Temperierstation (11), in dem die mindestens eine Führungsschiene (17, 18) derart verwunden bzw. gekrümmt ist, daß sie die Läufer (44) aus einer räumlichen Ausrichtung, in der sie die Kunststoffrohlinge (1) mit deren Öffnung (7) nach unten transportieren, in eine räumliche Ausdehnung bringen, in der sie die Kunststoffrohlinge (1) mit deren Öffnung (7) nach oben transportieren.

4. Vorrichtung nach einem der Ansprüche 1 bis 3, **dadurch gekennzeichnet, dass** die mindestens eine Führungsschiene (17, 18) in der Temperierstation (11) derart geführt ist, dass die Kunststoffrohlinge (1) von den Läufern (44) mit ihrer Öffnung (7) nach unten transportiert werden.

5. Vorrichtung nach einem der Ansprüche 1 bis 4, **gekennzeichnet durch** ein Übergaberad (15) mit am Umfang angeordneten Aufnahmetaschen (35), zur Übergabe der Kunststoffrohlinge (1) von einer Zuführeinheit (37) an die Läufer (44), wobei das Übergaberad (15) vor der Temperierstation (11) angeordnet ist.

6. Vorrichtung nach einem der Ansprüche 1 bis 5, **dadurch gekennzeichnet, dass** die mindestens eine Führungsschiene (17, 18) durch die Steckblasstation geht.

7. Vorrichtung nach einem der Ansprüche 1 bis 5, **gekennzeichnet durch** ein Blasrad (13) in der Streckblasstation, das die Kunststoffrohlinge (1) trägt, während diese auf ihre endgültige Form streckgeblasen werden.

8. Vorrichtung nach Anspruch 7, **gekennzeichnet durch** einen Einlaufstern (25) mit Aufnahmetaschen, der die Kunststoffrohlinge (1) von den Läufern (44) an das Blasrad (13) übergibt.

9. Vorrichtung nach einem der Ansprüche 1 bis 8, **dadurch gekennzeichnet, dass** die Halteeinrichtungen jeweils einen Dorn (47) umfassen, der derart angepaßt ist, dass er die Kunststoffrohlinge (1) in deren Öffnung (7) unter Reibschluß hält.

10. Vorrichtung nach einem der Ansprüche 1 bis 9, **dadurch gekennzeichnet, dass** die Halteeinrichtungen (47) an den Läufern (44) jeweils um eine Rotationsachse (61) drehbar gelagert sind, die senkrecht zu der mindestens einen Führungsschiene (17, 18) steht, zur drehbaren Lagerung der Kunststoffrohlinge (1) um deren Längsachse (59).

11. Vorrichtung nach Anspruch 10, **gekennzeichnet durch** eine Rotationseinrichtung mit mindestens einer feststehenden Zunge, die von einer Seite in die Bahn eingreift, die die Zungen (49) der Läufer (44) während des Durchlaufens der Temperierstation (11) beschreiben.

12. Vorrichtung nach einem der Ansprüche 1 bis 11, **dadurch gekennzeichnet, dass** die Halteeinrichtungen (47) an den Läufern (44) derart beweglich gelagert sind, daß ihr Abstand (63) zu der mindestens einen Führungsschiene (17, 18) veränderbar ist.

13. Vorrichtung nach Anspruch 12, **dadurch gekennzeichnet, dass** die Halteeinrichtungen (47) und die Läufer (44) jeweils federnd miteinander verbunden sind.

14. Vorrichtung nach einem der Ansprüche 12 und 13, **dadurch gekennzeichnet, dass** die Halteeinrichtungen (47) Anschläge (51) umfassen, die mit zumindest einer feststehenden Abstandskulisse (53) während der Bewegung der Läufer (44) entlang der Führungsschiene (17, 18) zusammenwirken, um den Abstand (63) der Halteeinrichtungen (47) zu der Führungsschiene (17, 18) zu verändern.

15. Vorrichtung nach den Ansprüchen 9 und 14, **dadurch gekennzeichnet, dass** die Übergabestation (29) eine Abstandskulisse (53) umfaßt, die derart ausgestaltet ist, dass sie den Abstand (63) der Dorne (47) zu der mindestens einen Führungsschiene (17, 18) vor der Übergabe der Kunststoffrohlinge (1) an die Läufer (44) verringert und den Abstand (63) der Halteeinrichtungen (47) von der mindestens einen Führungsschiene (17, 18) während der Übergabe derart erhöht, daß der Dorn (47) der Halteeinrichtungen in die Öffnung (7) des zu übergebenden Kunststoffrohlinges eingreift.

## Claims

1. Device for producing plastic hollow bodies, in particular plastic bottles, comprising a transport device (43) by means of which plastic preforms (1) are conveyed from a transfer station (29) through a temperature-control station (11) to a stretch blow-moulding station (13), the transport device (43) including at least one guide rail (17, 18) forming a closed track, in which guide rail (17, 18) run individual carriers (44) with holding devices (47) for the plastic preforms (1), and at least one drive means (49, 50) which pushes the carriers (44) along the at least one guide rail (17, 18), **characterised in that** the blow moulding station (13) is arranged in a different plane to the temperature-control station (11), **in that** a transfer zone (21) is provided between the temperature-control station (11) and the blow-moulding station (13), in which transfer zone (21) the at least one guide rail (17, 18) is so curved that the carriers (44) are moved from the plane of the temperature-control station (11) to the plane of the stretch blow-moulding station (13) while transporting the plastic preforms (1), and **in that** at least one change of orientation of the spatial position of the plastic preforms (1) is effected by twisting or the curvature of the at least one guide rail (17, 18).

2. Device according to claim 1, **characterised by** a first twisting or curvature zone (19) between the transfer station (29) and the temperature-control station (11), in which first twisting or curvature zone (19) the at least one guide rail (17, 18) is so twisted or curved that the carriers (44) are moved from a spatial orientation in which they transport the plastic preforms with their openings (7) facing upwards to a spatial extension in which they transport the plastic preforms (1) with their openings (7) facing downwards.

3. Device according to either of claims 1 and 2, **characterised by** a second twisting or curvature zone (21) adjoining the temperature-control station (11), in which second twisting or curvature zone (21) the at least one guide rail (17, 18) is so twisted or curved that it moves the carriers (44) from a spatial orientation in which they transport the plastic preforms (1) with their openings (7) facing downwards to a spatial extension in which they transport the plastic preforms (1) with their openings (7) facing upwards.

4. Device according to any one of claims 1 to 3, **characterised in that** the at least one guide rail (17, 18) is so configured in the temperature-control station (11) that the plastic preforms (1) are transported by the carriers (44) with their openings (7) facing downwards.

5. Device according to any one of claims 1 to 4, **characterised by** a transfer wheel (15) having reception pockets (35) arranged on its circumference for transferring the plastic preforms (1) from a feed unit (37) to the carriers (44), the transfer wheel (15) being arranged upstream of the temperature-control station (11).

6. Device according to any one of claims 1 to 5, **characterised in that** the at least one guide rail (17, 18) passes through the stretch blow-moulding station.

7. Device according to any one of claims 1 to 5, **characterised by** a blowing wheel (13) in the stretch blow-moulding station, which blowing wheel (13) carries the plastic preforms (1) while they are stretch blow-moulded to their final shape.

8. Device according to claim 7, **characterised by** an intake star wheel (25) having reception pockets which transfers the plastic preforms (1) from the carriers (44) to the blowing wheel (13).

9. Device according to any one of claims 1 to 8, **characterised in that** the holding devices each include a mandrel (47) which is so adapted that it holds the plastic preforms (1) in their openings (7) by frictional engagement.

10. Device according to any one of claims 1 to 9, **characterised in that** the holding devices (47) are in each case mounted on the carriers (44) rotatably about an axis of rotation (61) disposed perpendicularly to the at least one guide rail (17, 18) for rotatable mounting of the plastic preforms (1) about their longitudinal axis (59).

11. Device according to claim 10, **characterised by** a rotation device having at least one fixed tongue which engages from one side in the path described by the tongues (49) of the carriers (44) while they pass through the temperature-control station (11).

12. Device according to any one of claims 1 to 11, **characterised in that** the holding devices (47) are so mounted movably on the carriers (44) that their distance (63) from the at least one guide rail (17, 18) is variable.

13. Device according to claim 12, **characterised in that** the holding devices (47) and the carriers (44) are in each case connected resiliently to one another.

14. Device according to either of claims 12 and 13, **characterised in that** the holding devices (47) include stops (51) which cooperate with at least one fixed spacing member (53) during the movement of the carriers (44) along the guide rail (17, 18) in order to change the distance (63) of the holding devices (47) from the guide rail (17, 18).

15. Device according to claims 9 and 14, **characterised in that** the transfer station (29) includes a spacing member (53) which is so configured that it reduces the distance (63) of the mandrels (47) from the at least one guide rail (17, 18) before the transfer of the plastic preforms (1) to the carriers (44), and increases the distance (63) of the holding devices (47) from the at least one guide rail (17, 18) during the transfer in such a way that the mandrel (47) of the holding device engages in the opening (7) of the plastic preform to be transferred.

## Revendications

1. Dispositif pour la production de corps creux en matière plastique, notamment des bouteilles plastiques, avec un dispositif de transport (43) qui conduit des ébauches plastiques (1) d'une station de transfert (29) à une station de soufflage-étirage (13) en passant par une station d'équilibrage de température (11), le dispositif de transport (43) comprenant au moins un rail de guidage (17, 18) formant une voie fermée, dans laquelle passent des curseurs (44) individuels ayant des dispositifs de retenue (47) pour les ébauches plastiques (1), ainsi qu'au moins un moyen d'entraînement (49, 50) qui pousse les curseurs (44) le long de l'au moins un rail de guidage (17, 18),
**caractérisé en ce que**
la station de soufflage-étirage (13) est disposée dans un autre plan que la station d'équilibrage de température (11), avec entre la station d'équilibrage de température (11) et la station de soufflage-étirage (13) une zone de transfert (21) dans laquelle au moins l'un des rails de guidage (17, 18) est courbé de telle sorte que les curseurs (44) sont déplacés lors du transport des ébauches plastiques (1) du plan de la station d'équilibrage de température (11) au plan de la station de soufflage-étirage (13), et au moins une modification d'orientation de la position spatiale des ébauches plastiques (1) est effectuée en tordant ou en courbant l'au moins un rail de guidage (17, 18).

2. Dispositif selon la revendication 1,
**caractérisé par**
une première zone de torsion ou de courbure (19) entre la station de transfert (29) et la station d'équilibrage de température (11) dans laquelle l'au moins un des rails de guidage (17, 18) est tordu ou courbé de telle sorte que les curseurs (44) sont amenés d'une orientation spatiale dans laquelle ils transportent les ébauches plastiques avec leur ouverture (7) vers le haut, à une extension spatiale dans laquelle ils transportent les ébauches plastiques (1) avec leur ouverture (7) vers le bas.

3. Dispositif selon l'une quelconque des revendications 1 et 2,
**caractérisé par**
une deuxième zone de torsion ou de courbure (21) à la suite de la station d'équilibrage de température (11) dans laquelle l'au moins un rail de guidage (17, 18) est tordu ou courbé de telle sorte que les curseurs (44) sont amenés d'une orientation spatiale dans laquelle ils transportent les ébauches plastiques avec leurs ouverture (7) vers le bas, à une extension spatiale dans laquelle ils transportent les ébauches plastiques (1) avec leur ouverture (7) vers le haut.

4. Dispositif selon l'une quelconque des revendications 1 à 3,
**caractérisé en ce que**
l'au moins un rail de guidage (17, 18) est guidé dans la station d'équilibrage de température (11) de telle sorte que les ébauches plastiques (1) sont transportées avec leur ouverture (7) vers le bas par les curseurs (44).

5. Dispositif selon l'une quelconque des revendications 1 à 4,
**caractérisé par**
une roue de transfert (15) avec des poches de logement (35) disposées sur le pourtour, pour transférer les ébauches plastiques (1) d'une unité d'amenée (37) aux curseurs (44), la roue de transfert (15) étant disposée avant la station d'équilibrage de température (11).

6. Dispositif selon l'une quelconque des revendications 1 à 5,
**caractérisé en ce que**
l'au moins un rail de guidage (17, 18) passe dans la station de soufflage-étirage (13).

7. Dispositif selon l'une quelconque des revendications 1 à 5,
**caractérisé par**
une roue de soufflage (13) dans la station de soufflage-étirage (13) qui porte les ébauches plastiques (1), pendant que celles-ci sont soufflées et étirées dans leur forme définitive.

8. Dispositif selon la revendication 7,
**caractérisé par**
une étoile d'amenée (25) avec des poches de logement qui transfère les ébauches plastiques (1) des curseurs (44) à la roue de soufflage (13).

9. Dispositif selon l'une quelconque des revendications 1 à 8,
**caractérisé en ce que**
les dispositifs de retenue comprennent chacun un mandrin (47) adapté de telle sorte qu'il maintient les ébauches plastiques (1) dans leur ouverture (7) sous pression.

10. Dispositif selon l'une quelconque des revendications 1 à 9,
**caractérisé en ce que**
les dispositifs de retenue (47) sont placés sur les curseurs (44), de manière pivotante chacun autour d'un axe de rotation (61) perpendiculaire à l'au moins un rail de guidage (17, 18) pour bloquer les ébauches plastiques (1) en rotation autour de leur axe longitudinal (59).

11. Dispositif selon la revendication 10,
**caractérisé par**
un dispositif de rotation avec au moins une languette fixe qui s'engrène par un côté dans la voie que les languettes (49) des curseurs (44) décrivent pendant le passage à la station d'équilibrage de température (11).

12. Dispositif selon l'une quelconque des revendications 1 à 11,
**caractérisé en ce que**
les dispositifs de retenue (47) sont placés de manière mobile sur les curseurs (44) de telle sorte que leur distance (63) par rapport à l'au moins un rail de guidage (17, 18) peut être modifiée.

13. Dispositif selon la revendication 12,
**caractérisé en ce que**
les dispositifs de retenue (47) et les curseurs (44) sont reliés entre eux de manière élastique.

14. Dispositif selon l'une quelconque des revendications 12 et 13,
**caractérisé en ce que**
les dispositifs de retenue (47) comprennent des butées (51) qui coopèrent avec au moins une coulisse d'écartement fixe (53) pendant le mouvement des curseurs (44) le long des rails de guidage (17, 18), afin de modifier la distance (63) des dispositifs de retenue (47) par rapport aux rails de guidage (17, 18).

15. Dispositif selon les revendications 9 et 14,
**caractérisé en ce que**
la station de transfert (29) comprend une coulisse d'écartement (53) réalisée de telle sorte qu'elle diminue la distance (63) entre les mandrins (47) et l'au moins un rail de guidage (17, 18) avant le transfert des ébauches plastiques (1) aux curseurs (44), et augmente la distance (63) entre les dispositifs de retenue (47) et l'au moins un rail de guidage (17, 18) pendant le transfert de telle sorte que le mandrin (47) des dispositifs de retenue s'engrène dans l'ouverture (7) de l'ébauche plastique à transférer.
